# EUROPEAN PATENT SPECIFICATION

(11) **EP 1 973 274 B1**
(45) Date of publication and mention of the grant of the patent: **02.06.2010**
(21) Application number: 08250790.6
(22) Date of filing: 07.03.2008
(51) Int. Cl.: H04L 12/28, H04L 12/56, H04L 12/46

(54) **Method for MAC process and flexible connection in wireless multi-hop relaying network**
Verfahren für MAC-Prozess und flexible Verbindung in einem drahtlosen Multihop-Relaisnetz
Procédé pour procédé MAC et la connexion souple dans un réseau relais sans fil à sauts multiples

(30) Priority: 09.03.2007 US 905915; 29.02.2008 US 40077
(43) Date of publication of application: 24.09.2008
(73) Proprietor: Industrial Technology Research Institute, Chutung Hsinchu 31040 (TW)
(72) Inventor: Chou, Chie-Ming, Cingshuei Township Taichung County 436 (TW); Ren, Fang-Ching Industrial Technology Research Institute, Chutung, Hsinchu 31040 (TW); Lin, Tzu-Ming Industrial Technology Research Institute, Chutung, Hsinchu 31040 (TW)
(74) Representative: Roberts, Mark Peter

(56) References cited:
- EP-A- 1 686 729
- WO-A-2007/019672
- WANG H ET AL: "Data forwarding and routing path setup for IEEE 802.16j multihop relay networks" IEEE 802.16 BROADBAND WIRELESS ACCESS WORKING GROUP, [Online] 9 November 2006 (2006-11-09), pages 0-10, XP002430258 Retrieved from the Internet: URL:http://www.ieee802.org/16/relay/contri b/C80216j-06_212r1.pdf> [retrieved on 2007-04-19]
- H. ZHANG, P. ZHU, M. FONG, W. TONG, D. STEER, D. YU, M. NADEN, G. WANG: "MAC PDU Design for Supporting Data Forwarding Schemes in 802.16j" IEEE 802.16 BROADBAND WIRELESS ACCESS WORKING GROUP, [Online] 8 January 2007 (2007-01-08), pages 0-9, XP002491716 Retrieved from the Internet: URL:http://www.ieee802.org/16/relay/contri b/C80216j-07_094.pdf> [retrieved on 2008-08-11]
- H. ZHANG, P. ZHU, M. FONG, W. TONG, D. STEER, D. YU, G. WANG: "MMR Network distributed tunnel connection management" IEEE 802.16 BROADBAND WIRELESS ACCESS WORKING GROUP, [Online] 5 March 2007 (2007-03-05), pages 0-9, XP002491717 Retrieved from the Internet: URL:http://www.ieee802.org/16/relay/contri b/C80216j-07_211.pdf> [retrieved on 2008-08-11]
- A. CHINDAPOL, J. CHUI, H. ZENG: "Routing with CID Encapsulation" IEEE 802.16 BROADBAND WIRELESS ACCESS WORKING GROUP, [Online] 8 January 2007 (2007-01-08), pages 0-4, XP002491718 Retrieved from the Internet: URL:http://www.ieee802.org/16/relay/contri b/C80216j-07_126.pdf> [retrieved on 2008-08-11]

## Description

This application claims priority from U.S. Provisional Patent Application No. 60/905,915 filed March 9, 2007.

Systems and methods disclosed herein relate to the field of mobile communications, and more specifically, to systems for and methods of analyzing a frame received at a relay station in a wireless multi-hop relaying network.

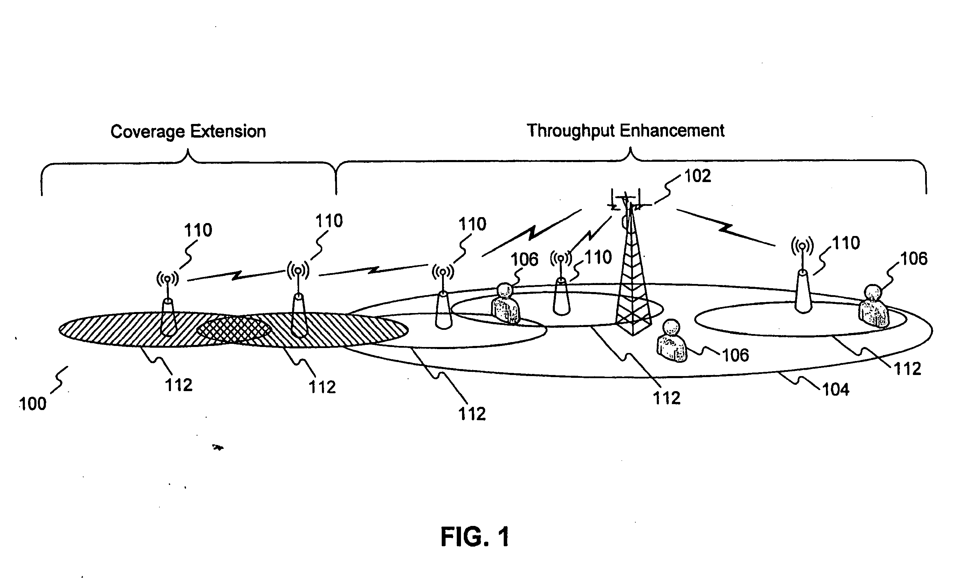

Figure 1 illustrates a conventional wireless communication network 100. With reference to Figure 1, in network 100, a base station 102 provides connectivity with a larger network (not shown) for devices within a base station coverage area 104. One or more mobile subscribers 106 may receive wireless connectivity directly from base station 102 through one or more wireless connections. However, when network 100 has numerous mobile subscribers 106, base station 102 may not be able to process the large number of wireless connections, which may lead to communication delays and bottlenecks in network 100. Therefore, in order to increase throughput, network 100 may also employ one or more relay stations 110. Relay stations 110 establish wireless connections with mobile stations 106 in mobile station coverage areas 112 respectively associated with relay stations 110, and relay the wireless connection to base station 102, either directly, or via one or more additional relay stations 110. In addition to enhancing throughput, relay stations 110 also enable base station 102 to enhance its coverage area beyond base station coverage area 104 to mobile subscriber coverage area 112.

Communication among base station 102, relay stations 110, and mobile subscribers 112, may be accomplished through the use of a data link layer communication protocol known as the media access control (MAC) data communication protocol. The MAC protocol is a connection oriented protocol with the ability to address specific ports and adaptors on hardware devices, such as mobile subscriber 106. The hardware adaptors will process the received data only when specific ports are identified with the data, otherwise the adaptors will remain idle during communication.

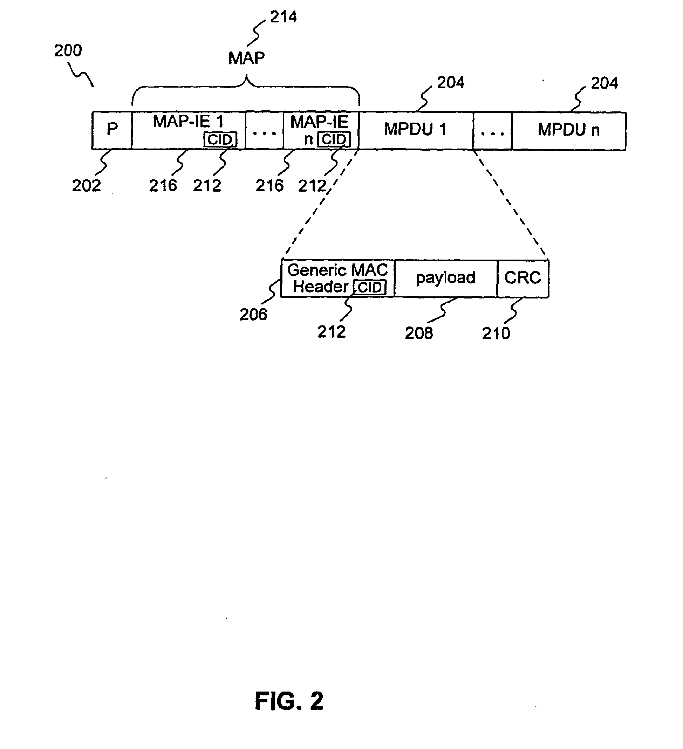

Figure 2 illustrates an example of a legacy frame structure 200 used with the MAC protocol. With reference to Figure 2, field P 202 is a reference signal, such as a preamble in a WiMAX system which provides the function of frame synchronization. Field MPDU 204 is a MAC protocol data unit. Field MPDU 204 includes a generic MAC header 206, payload data 208, and an optional cyclic redundancy check (CRC) field 210. MAC header 206 also includes a connection identifier CID 212, which associates its MPDU 204 with a particular logical connection to a hardware port on a mobile subscriber. CID 212 is also located in MAP-IE 216. Payload data 208 includes data that will eventually be processed by a mobile subscriber to provide a mobile service to a user. Finally, CRC 210 is an optional field to ensure the integrity of the payload data 208.

With further reference to Figure 2, field MAP 214 provides a directory of locations within legacy frame structure 200 in which to locate particular MPDUs 204. MAP 214 includes one or more MAP Information Elements (MAP-IEs) 216, such that each MAP-IE 216 corresponds to a particular MPDU 204. Each MAP-IE 216 includes connection parameters used to identify which relay stations will receive the corresponding MPDU 204. MAP-IE 216 may also include parameters for identifying where an MPDU 204 is located within legacy frame structure 200, the length of MPDU 204, the identity of the intended recipient of MPDU 204, and one or more transmission parameters. MAP 214 corresponds to a header area of legacy frame structure 200, while MPDU 204 corresponds to a body area of legacy frame structure 200.

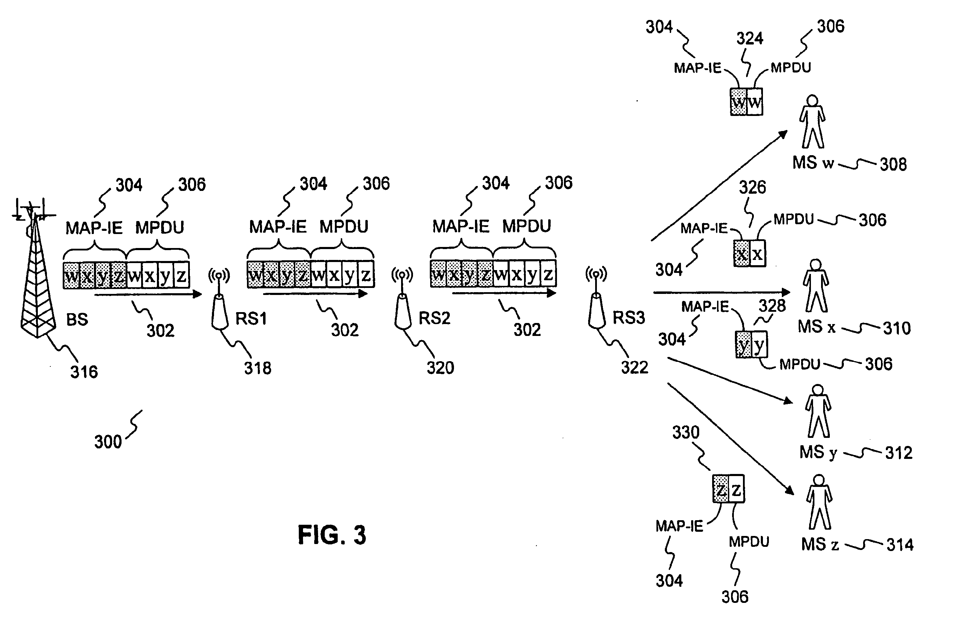

Figure 3 illustrates a conventional system 300 for processing a legacy frame structure 302, with a structure similar to legacy frame structure 200 of Figure 2. Legacy frame structure 302 includes MAP-IEs 304 and MPDUs 306 that correspond to one of mobile subscribers w (308), x (310), y (312), and z (314). Legacy frame structure 302 originates at a base station 316, is first transferred to a relay station 318, next to a relay station 320, and then to a relay station 322. At relay station 322, legacy frame structure 302 is split up such that individual MAP-IEs 304 and individual MPDUs 306 are grouped according to their common mobile subscriber destination (w 308, x 310, y 312, or z 314) to form message pairs 324, 326, 328, and 330. Relay station 322 then distributes message pairs 324, 326, 328, and 330 to their appropriate mobile subscribers w 308, x 310, y 312, and z 314, respectively, depending on their CID.

However, legacy frame structure 302 redundantly includes a MAP-IE 304 for each MPDU 306. As discussed previously, MAP-IEs 304 include connection parameters used to identify which relay stations will receive the corresponding MPDUs 304. In the current example, each MAP-IE 304 includes connection parameters for directing corresponding MPDUs 306 through relay stations 318, 320, and 322. However, since all MPDUs 306 are traveling through relay stations 318, 320, and 322 together, it is unnecessary to have separate MAP-IEs 304 associated with each MPDU 306. Instead, it is possible to only have a single field of connection information for multiple MPDUs 306 traveling through the relay stations 318, 320, and 322 together.

Wang H et al.: "Data Forwarding and Routing Path Setup for IEEE 802.16j Multihop Relay Networks" IEEE 802.16 Broadband Access Working Group, November 2006, discloses the use of a path CID to identify each routing path between a base station and a relay station. A forwarding CID is used to identify the next hop so that ambiguity may be eliminated.

Zhang H et al.: "MAC PDU Design for Supporting Data Forwarding Schemes in 802.16j", IEEE 802.16 Broadband Wireless Access Working Group, January 2007, discloses enhancing a packet format by providing QOS Controls.

Wang G et al.: MMR Network Distributed Tunnel Connection Management", IEEE 802.16 Broadband Wireless Access Working Group, March 2007, discloses tunnel swapping for tunnel packet mode under distributed controls.

In accordance with the invention, there is provided a method for processing a frame received at a relay station in a wireless multi-hop relaying network, the frame including first control data in a header of the frame and second control data in a body of the frame, the method comprising the steps of:
examining the header of the frame to determine whether the first control data includes a tunnel identifier;
if the first control data does include the tunnel identifier classifying the frame by examining the contents of the first control data;
if the first control data does not include the tunnel identifier:
   parsing the body of the frame to retrieve the second control data;
   determining whether the second control data includes the tunnel identifier;
   classifying the frame by examining the contents of the first and second control data; and
forwarding the frame.

Further in accordance with the invention, there is provided a computer-readable medium comprising instructions that when performed on a processor cause the processor to perform the abovementioned method for processing a frame received at a relay station in a wireless multi-hop relaying network.

Additional features and advantages of the invention will be set forth in part in the description which follows, and in part will be obvious from the description, or may be learned by practice of the invention. The features and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

The accompanying drawings, which are incorporated in and constitute a part of this specification, illustrate embodiments of the invention and together with the description, sere to explain the principles of the invention.

Figure 1 is a diagram of a conventional mobile communications system;

Figure 2 is diagram of a legacy frame structure;

Figure 3 is diagram showing processing of a legacy frame structure in a conventional mobile communications system;

Figure 4 is a diagram of a mobile communications system using tunneling;

Figure 5A is a diagram of a tunnel packet mode frame;

Figure 5B is a diagram of a tunnel burst mode frame structure;

Figure 5C is a diagram of a tunnel packet mode frame configured according to an embodiment consistent with the present invention;

Figure 6 is a flowchart of frame classification at a relay station;

Figure 7 is a diagram illustrating a relaying network employing distributed control, to facilitate changing a frame type to a different format.

Figure 8 is a state diagram illustrating how a relay station translates between different frame types;

Figure 9A is a diagram of a tunneling system in which multiple relay stations retain and forward a tunnel packet using multiple connections;

Figure 9B is a diagram of a tunnel packet mode frame configured according to an embodiment consistent with the present invention; and

Figure 9C is a diagram of an improved tunneling system where multiple relay stations retain and forward a tunnel packet using a single connection.

Figure 10 is a block diagram of an exemplary host corresponding to the base station, relay station, or mobile subscriber.

Reference will now be made in detail to the exemplary embodiments of the invention, examples of which are illustrated in the accompanying drawings. Wherever possible, the same reference numbers will be used throughout the drawings to refer to the same or like parts.

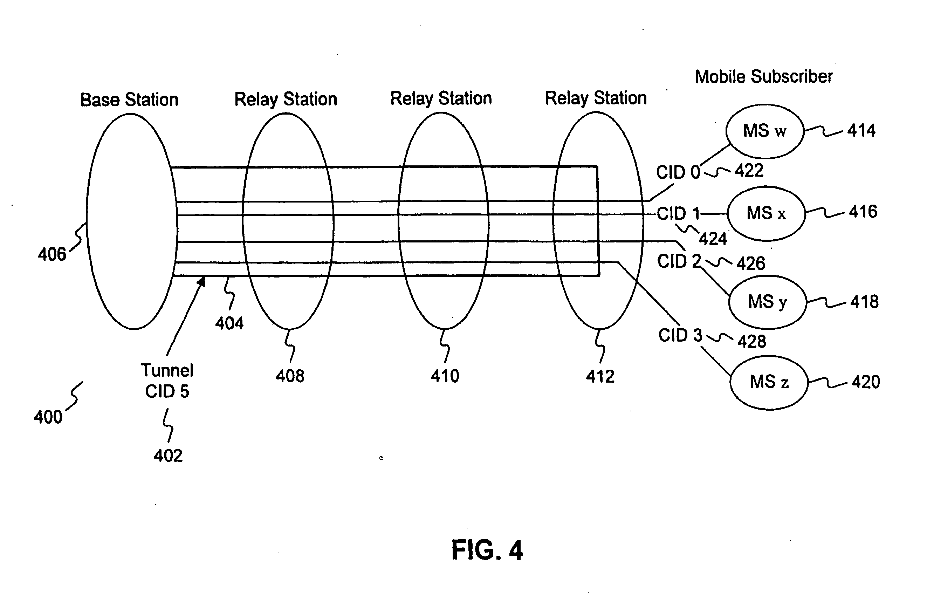

Figure 4 illustrates a tunneling system 400, which is used to overcome the aforementioned deficiencies of the legacy frame structure. With respect to Figure 4, a tunnel identifier (T-CID) 402 is associated with a plurality of MPDUs 404. MPDUs originate at a base station 406, and travel through relay stations 408, 410, and 412. At relay station 412, MPDUs 404 are sent to their destination mobile subscriber w (414), x (416), y (418), or z (420), depending on their CID 422, 424, 426, or 428.

There are a plurality of tunneling modes that may be used with tunneling system 400. One example is tunnel packet mode, and another is tunnel burst mode.

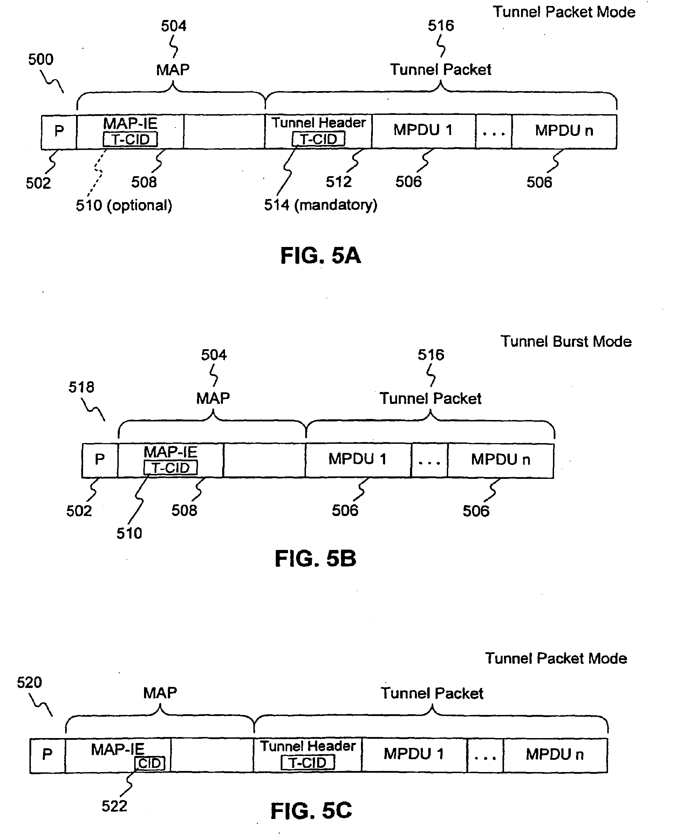

Figure 5A illustrates an example of a tunnel packet mode frame 500. Tunnel packet frame 500 includes fields P 502, MAP 504, and MPDU 506. In this example, MAP 504 includes a single MAP-IE 508, which includes connection parameters used to identify which stations are to receive all MPDUs 506. Within MAP-IE 508 is an optional T-CID 510, which associates all MPDUs 506 in tunnel packet mode frame 500 with a particular tunnel connection. Additionally, a tunnel header 512 includes a mandatory T-CID 514, which similarly associates all MPDUs 506 in tunnel packet mode frame 500 with a particular tunnel connection. Tunnel header 512 encapsulates MPDUs 506 into a tunnel packet 516. MAP 504 corresponds to a header area of the tunnel packet frame 500, while tunnel packet 516 corresponds to a body area of the tunnel packet frame 500.

In tunnel packet mode, when tunnel packet mode frame 500 is sent from a base station to a mobile subscriber via one or more relay stations, the one or more relay stations first examines MAP-IE 508 to collect connection parameters, and may collect optional T-CID 510 if available. If T-CID 510 is not available, the one or more relay stations next parses the tunnel packet 516 in order to inspect T-CID 514 within tunnel header 512. Once the relay station determines the presence of T-CID 514 (or 510), it associates MPDUs 506 with a tunnel connection specified in T-CID 514 (or 510), and then forwards tunnel packet frame 500 in accordance with the tunnel connection. The tunnel connection specifies the relay stations that each MPDU 506 must pass through to reach the appropriate mobile subscriber.

Figure 5B illustrates an example of a tunnel burst mode frame 518. Tunnel burst mode frame 518 is similar to tunnel packet mode frame 500, except that tunnel burst mode frame 518 does not include tunnel header 512, and therefore, does not include T-CID 514. Here, T-CID 510 is a mandatory field, instead of an optional field. MAP 504 corresponds to a header area of the tunnel burst mode frame 518, while tunnel packet 516 corresponds to a body area of the tunnel burst mode frame 518.

In tunnel burst mode, when tunnel burst mode frame 518 is sent from a base station to a mobile subscriber via one or more relay stations, the one or more relay stations examines MAP-IE 508 to collect connection parameters and T-CID 510. Once the relay station determines the presence of T-CID 510, it associates tunnel packet 516 with a tunnel connection, and then forwards tunnel burst mode frame 518 accordingly. The relay station forwards tunnel packet 516 without parsing it, since T-CID 510 has already been retrieved from MAP-IE 508. In this way, fast tunneling is accomplished.

Therefore, there may be three types of frames used with a MAC protocol: the legacy frame, the tunnel packet mode frame, and the tunnel burst mode frame. The relay stations may be configured to process any one of these three types of frames. However, relay stations do not have the ability to process packet streams that include all of these three types of frames. This is in part due to the difficulty in distinguishing between tunnel packet mode frame 500 and tunnel burst mode frame 518, which have two differences. First, T-CID 510 is optional in tunnel packet mode frame 500 whereas T-CID 510 is mandatory in tunnel burst mode frame 518. However, since T-CID 510 may be present in tunnel packet mode frame 500 and must be present in tunnel burst mode frame 518, there is not a clear differentiation between the two frame types on this basis. Second, tunnel packet mode frame 500 includes tunnel header 512 with T-CID 514, whereas tunnel burst mode frame 518 does not. However, in order to determine this difference, the relay station must parse tunnel packet 516 to check for the presence of tunnel header 512. A benefit of tunnel burst mode is that the tunnel packet 516 could be quickly forwarded without parsing. Accordingly, since relay stations cannot distinguish between tunnel packet mode frame 500 and tunnel burst mode frame 518, without retaining the benefits of the different formats, the relay station cannot be configured to handle both types of frames.

Figure 5C illustrates a tunnel packet mode frame 520 configured according to an embodiment consistent with the present invention. In contrast to tunnel packet mode frame 500 (see Figure 5A), tunnel packet mode frame 520 omits optional T-CID 510, and instead includes a basic CID 522. Accordingly, tunnel packet mode frame 520 has a structure clearly distinct and recognizable from tunnel burst mode frame 518 (see Figure 5B), because frame 518 includes T-CID 510 in MAP-IE 508, whereas frame 520 does not. As a result, a relay station can distinguish between tunnel packet mode frame 520 and tunnel burst mode frame 518 without parsing tunnel packet 516.

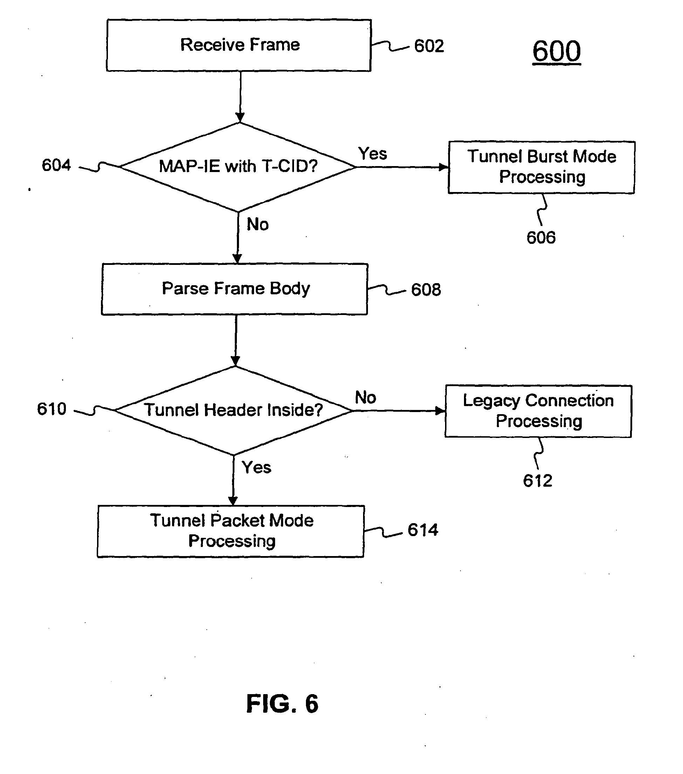

Figure 6 is a flowchart 600 describing frame classification at a relay station. The relay station first receives a frame for processing (step 602). Then the relay station inspects the MAP-IE in the frame header to determine whether or not a T-CID is present (step 604). If the relay station determines that T-CID is present in MAP-IE, then the relay station classifies the frame for processing according to tunnel burst mode, and processes it in accordance with this classification (step 606). Alternatively, if the relay station determines that T-CID is not present in MAP-IE, the relay station parses the frame body (step 608). After parsing the frame body, the relay station determines whether or not there is a tunnel header inside the frame body (step 610). If the relay station determines that there is not a tunnel header inside the frame body, then the relay station classifies the frame as a legacy frame, and processes it in accordance with this classification at step 612. Alternatively, if the relay station determines that there is a tunnel header embedded inside the frame body, the relay station classifies the frame for processing according to tunnel packet mode, and processes it in accordance with this classification at step 614. In this way, frame classification at a relay station is accomplished.

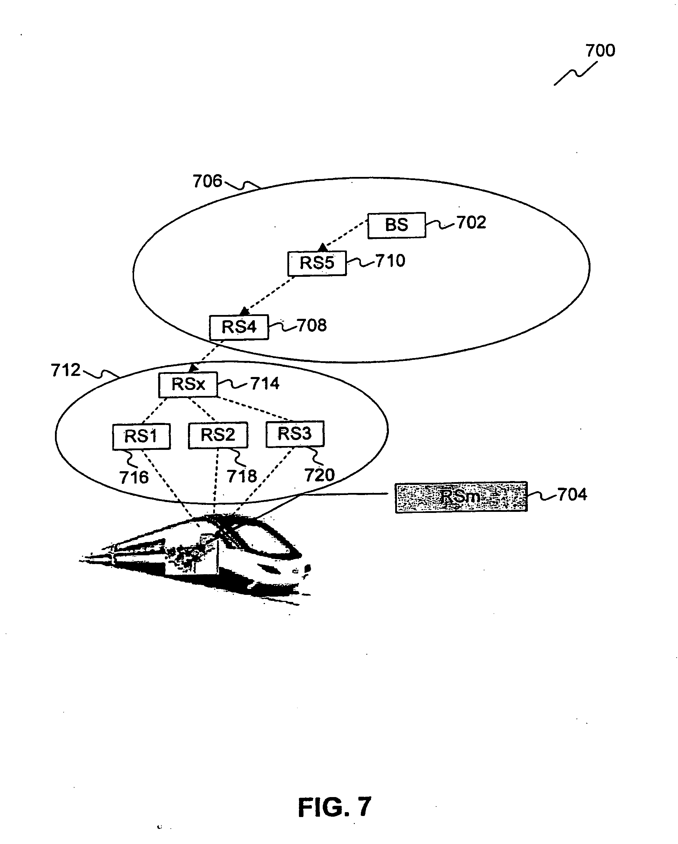

Figure 7 is a diagram illustrating a relaying network 700 employing distributed control, where it may be necessary to translate a frame type to a different format. With reference to Figure 7, when a base station (BS) 702 wants to send data to a mobile relay station (RSm) 704, BS 702 can use the tunnel packet mode initially in a first tunnel domain 706 for tunneling. When a relay station RS4 708, at the boundary of tunnel domain 706, receives the data from a relay station RS5 710, RS4 708 translates the data from the tunnel packet mode to the legacy frame format in order to cross from first tunnel domain 706 into a second tunnel domain 712. After receiving the data, a relay station RSx 714 in second tunnel domain 712 translates the data from the legacy frame format into the tunnel packet mode for tunneling to RSm 704 via relay stations RS1 716, RS2 718, or RS3 720. In this way, tunneling can also be achieved with distributed control where the legacy mode must be used to send the data among different tunnel domains. This is done because a different tunnel connection is used in first tunnel domain 706 than in second tunnel domain 712. To create a new tunnel connection in second tunnel domain 712, it may be necessary to first translate from the tunnel packet mode to the legacy frame format, and then translate back to tunnel packet mode. The second translation results in a new tunnel connection for second tunnel domain 712.

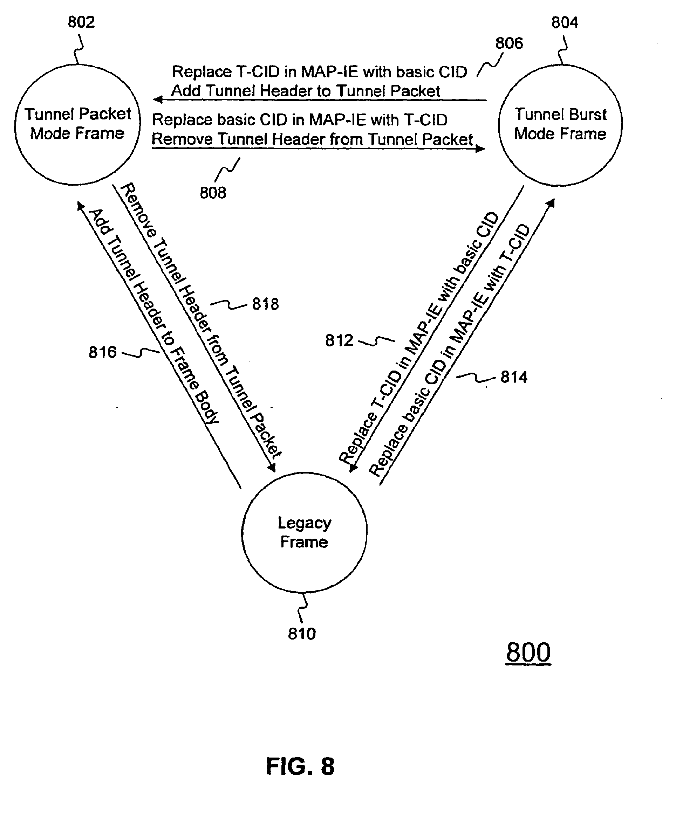

Figure 8 is a state diagram 800 illustrating how a relay station translates between different frame types once a frame has been classified. In translating from a tunnel burst mode frame 804 to a tunnel packet mode frame 802, the relay station replaces the T-CID from the MAP-IE with a basic CID, and adds the tunnel header to the tunnel packet (806). Conversely, when translating from tunnel packet mode frame 802 to tunnel burst mode frame 804, the relay station replaces the basic CID in the MAP-IE with the T-CID and removes the tunnel header from the tunnel packet (808). Alternatively, in translating from tunnel burst mode frame 804 to a legacy frame 810, the relay station replaces the T-CID from the MAP-IE with the basic CID (812). Conversely, in translating from legacy frame 810 to tunnel burst mode frame 804, the relay station replaces the basic CID in the MAP-IE with the T-CID (814). Finally, in translating from legacy frame 810 to tunnel packet mode frame 802, the relay station adds the tunnel header to the body of frame (816). Conversely, in translating from tunnel packet mode frame 802 to legacy frame 810, the relay station removes the tunnel header from tunnel packet (818). In this way, frame translation is accomplished.

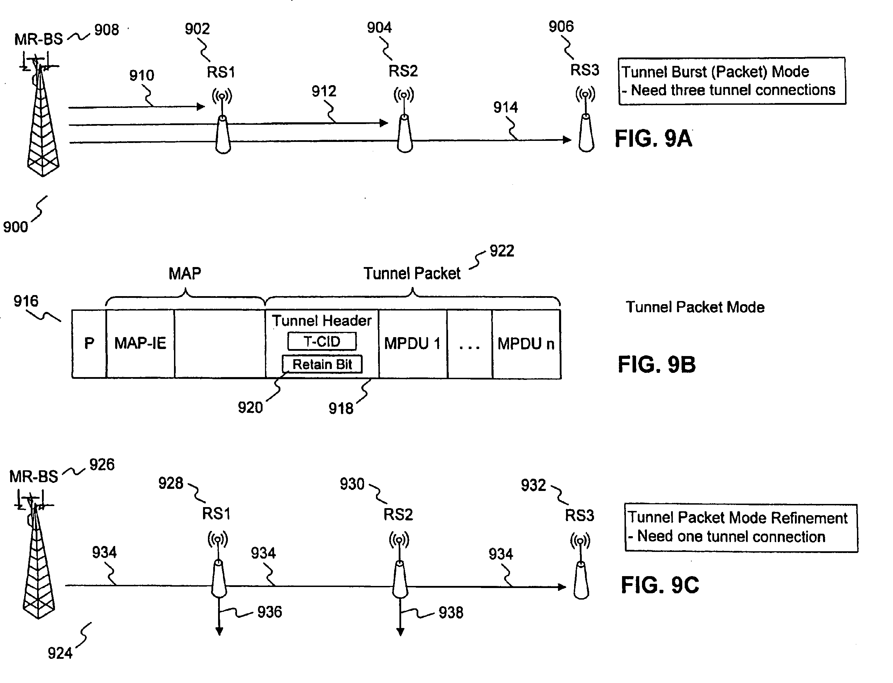

Figure 9A illustrates a tunneling system 900 in which multiple relay stations RS1 902, RS2 904, and RS3 906 receive the same tunnel packet to send to mobile subscribers in their respective coverage areas. This scenario may arise when a particular tunnel packet is sent to a plurality of mobile subscribers, such as during a broadcast. Referring to Figure 9A, a base station 908 establishes a first tunnel connection 910 for transmitting the tunnel packet to relay station RS1 902. Base station 908 establishes a second tunnel connection 912 for transmitting the tunnel packet to relay station RS2 904. Finally, base station 908 establishes a third tunnel connection 914 for transmitting the tunnel packet to relay station RS3 906. Therefore, three separate connections are established to send the same tunnel packet to three different relay stations 902, 904, and 906.

Figure 9B illustrates a tunnel packet mode frame 916 according to a second embodiment, which differs from tunnel packet mode frame 518 (see Figure 5B). A tunnel header 918, includes a retain bit 920. Retain bit 920 informs relay stations along the tunnel connection whether or not they should retain and forward a tunnel packet 922 of frame 916, or just forward tunnel packet 922. Retain bit 920 may be a bit, flag, integer, character, or any other data type.

Figure 9C illustrates an improved tunneling system 924 using tunnel packet mode frame 916. A base station 926 receives a tunnel packet that is required by a plurality of relay stations RS1 928, RS2 930, and RS3 932. Accordingly, base station 926 sets retain bit 920 in tunnel header 918 of tunnel packet 922. Base station 926 then establishes a single connection 934 with end relay station RS3 932. Base station 926 first transmits the tunnel packet to relay station RS1 928. Relay station RS1 928 parses the tunnel packet to retrieve the tunnel header. Upon determining that retain bit 920 is set, relay station RS1 928 retains a copy of the tunnel packet to send to mobile subscribers in its coverage area (936). Relay station RS1 928 then forwards the tunnel packet to relay station RS2 930, which also retains a copy of the tunnel packet to send to mobile subscribers in its coverage area (938) by examining the retaining bit. Finally, relay station RS2 930 sends the tunnel packet to the end point of the connection, which is relay station RS3 932. In this way, only a single connection is required when sending the same tunnel packet to a plurality of relay stations where each relay station forwards the tunnel packet to mobile subscribers in its coverage area.

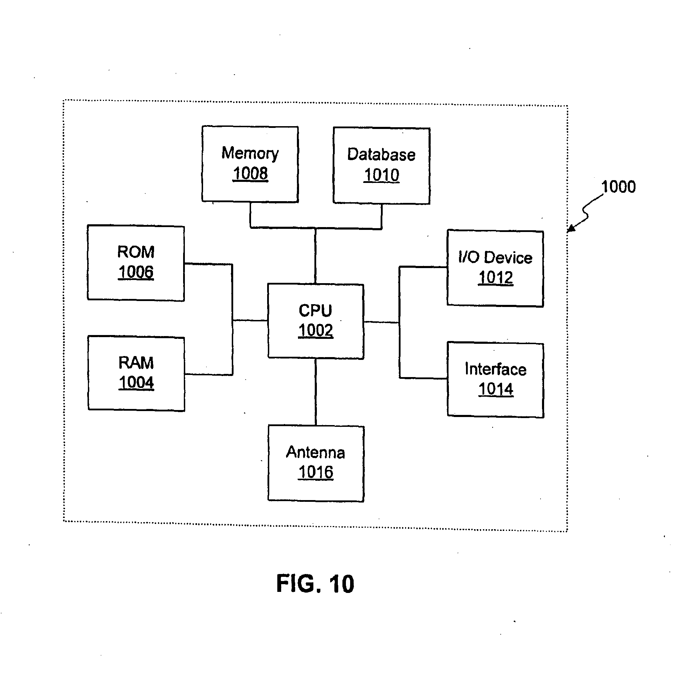

With reference to Figure 10, each base station, relay station, or mobile subscriber described herein may be implemented as a host 1000 including one or more of the following components: at least one central processing unit (CPU) 1002 configured to execute computer program instructions to perform various processes and methods, random access memory (RAM) 1004 and read only memory (ROM) 1006 configured to access and store information and computer program instructions, memory 1008 to store data and information, one or more databases 1010 to store tables, lists, or other data structures, one or more I/O devices 1012, one or more interfaces 1014, one or more antennas 1016, etc. Each of these components is well-known in the art.

Other embodiments of the invention will be apparent to those skilled in the art from consideration of the specification and practice of the invention disclosed herein. It is intended that the specification and examples be considered as exemplary only, with a true scope of the invention being indicated by the following claims.

## Claims

1. A method for processing a frame received at a relay station in a wireless multi-hop relaying network, the frame including first control data (508) in a header of the frame (504) and second control data (512) in a body of the frame (516), the method comprising the steps of:
examining the header of the frame (504) to determine whether the first control data (508) includes a tunnel identifier (510);
if the first control data (508) does include the tunnel identifier (510) classifying the frame by examining the contents of the first control data (508);
if the first control data (508) does not include the tunnel identifier:
parsing the body of the frame (516) to retrieve the second control data (512);
determining whether the second control data (512) includes the tunnel identifier;
classifying the frame by examining the contents of the first and second control data (508 and 512); and
forwarding the frame.

2. The method of claim 1, further comprising the steps of:
classifying the frame as a tunnel burst mode frame (518) if the first control data (508) includes the tunnel identifier (510);
classifying the frame as a tunnel packet mode frame (520) if the first control data does not include the tunnel identifier but the second control data includes the tunnel identifier; and
classifying the frame as a legacy frame (200) if both the first control data and the second control data do not include the tunnel identifier.

3. The method of claim 2, further comprising the step of translating the frame from a tunnel burst mode frame (804) to a legacy frame (810) by replacing the tunnel identifier in the first control data with a basic connection identifier.

4. The method of claim 2, further comprising the step of translating the frame from a tunnel burst mode frame (804) to a tunnel packet mode frame (802) by replacing the tunnel identifier in the first control data with a basic connection identifier, and inserting the second control data with the tunnel identifier in the body of the frame.

5. The method of claim 2, further comprising the step of translating the frame from a tunnel packet mode frame (802) to a legacy frame (810) by removing the second control data from the frame.

6. The method of claim 2, further comprising the step of translating the frame from a tunnel packet mode frame (802) to a tunnel burst mode frame (804) by replacing a basic connection identifier in the first control data with the tunnel identifier, and removing the second control data from the frame.

7. The method of claim 2, further comprising the step of translating the frame from a legacy frame (810) to a tunnel packet mode frame (802) by inserting the second control data with the tunnel identifier in the body of the frame.

8. The method of claim 2, further comprising the step of translating the frame from a legacy frame (810) to a tunnel burst mode frame (804) by replacing a basic connection identifier in the first control data with the tunnel identifier.

9. The method of any one of claims 2-8, further comprising the steps of:
determining that the frame is classified as a tunnel packet mode frame (916);
retaining a copy of the body of the frame upon determining that the retaining bit (920) is set.

10. The method of any one of claims 1-9, wherein the relaying network is under distributed control including a first tunnel routing domain (706) and a second tunnel routing domain (712), the method further comprising the steps of:
automatically translating the frame from a first frame format to a second frame format at a boundary of the first tunnel routing domain (706); and
forwarding the translated frame from the first tunnel routing domain (706) to the second tunnel routing domain (712).

11. The method of claim 10, wherein the first frame format and second frame format are one of:
the tunnel packet mode frame and the legacy frame, respectively;
the legacy frame and the tunnel packet mode frame, respectively;
the legacy frame and the tunnel burst mode frame, respectively; and
the tunnel burst mode frame and the legacy frame, respectively.

12. The method of any one of claims 2-11, further comprising the steps of:
determining that the frame is classified as a tunnel burst mode frame: and
automatically forwarding a tunnel packet of the tunnel burst mode frame without parsing the body of the frame.

13. A computer-readable medium comprising instructions that when performed on a processor cause the processor to perform a method for processing a frame received at a relay station in a wireless multi-hop relaying network according to any one of claims 1-12.

## Patentansprüche

1. Verfahren zur Bearbeitung eines an einer Relais-Station in einem drahtlosen Multihop-Relaisnetz empfangenen Frames, wobei der Frame in einer Kopfzeile des Frames (504) erste Steuerdaten (508) und in einem Frame-Körper (516) zweite Steuerdaten (512) aufweist, wobei das Verfahren folgende Schritte umfasst:
Prüfung der Kopfzeile des Frames (504), um zu ermitteln, ob die ersten Steuerdaten (508) eine Tunnelkennung (510) aufweisen;
falls die ersten Steuerdaten (508) eine Tunnelkennung (510) aufweisen, Klassifizierung des Frames durch Prüfung des Inhalts der ersten Steuerdaten (508);
falls die ersten Steuerdaten (508) keine Tunnelkennung (510) aufweisen:
Parsing des Frame-Körpers (516), um die zweiten Steuerdaten (512) abzurufen;
Ermittlung, ob die zweiten Steuerdaten (512) die Tunnelkennung aufweisen;
Klassifizierung des Frames durch Prüfung des Inhalts der ersten und der zweiten Steuerdaten (508 und 512); und
Weiterleitung des Frames.

2. Verfahren gemäß Anspruch 1, ferner umfassend folgende Schritte:
Klassifizierung des Frames als Tunnel-Burst-Modus-Frame (518), falls die ersten Steuerdaten (508) die Tunnelkennung (510) aufweisen;
Klassifizierung des Frames als Tunnel-Paket-Modus-Frame (520), falls die ersten Steuerdaten die Tunnelkennung nicht aufweisen, aber die zweiten Steuerdaten die Tunnelkennung aufweisen; und
Klassifizierung des Frames als Legacy-Frame (200), falls sowohl die ersten Steuerdaten als auch die zweiten Steuerdaten die Tunnelkennung nicht aufweisen.

3. Verfahren gemäß Anspruch 2, ferner umfassend den Schritt der Übersetzung des Frames aus einem Tunnel-Burst-Modus-Frame (804) in einen Legacy-Frame (810) durch Ersetzen der Tunnel-Kennung in den ersten Steuerdaten durch eine Basis-Verbindungskennung.

4. Verfahren gemäß Anspruch 2, ferner umfassend den Schritt der Übersetzung des Frames aus einem Tunnel-Burst-Modus-Frame (804) in einen Tunnel-Paket-Modus-Frame (802) durch Ersetzen der Tunnel-Kennung in den ersten Steuerdaten durch eine Basis-Verbindungskennung und Einfügen der zweiten Steuerdaten mit der Tunnel-Kennung in den Frame-Körper.

5. Verfahren gemäß Anspruch 2, ferner umfassend den Schritt der Übersetzung des Frames aus einem Tunnel-Paket-Modus-Frame (802) in einen Legacy-Frame (810) durch Entfernen der zweiten Steuerdaten aus dem Frame.

6. Verfahren gemäß Anspruch 2, ferner umfassend den Schritt der Übersetzung des Frames aus einem Tunnel-Paket-Modus-Frame (802) in einen Tunnel-Burst-Modus-Frame (804) durch Ersetzen einer Basis-Verbindungskennung in den ersten Steuerdaten durch die Tunnel-Kennung und Entfernen der zweiten Steuerdaten aus dem Frame.

7. Verfahren gemäß Anspruch 2, ferner umfassend den Schritt der Übersetzung des Frames aus einem Legacy-Frame (810) in einen Tunnel-Paket-Modus-Frame (802) durch Einfügen der zweiten Steuerdaten mit der Tunnel-Kennung in den Frame-Körper.

8. Verfahren gemäß Anspruch 2, ferner umfassend den Schritt der Übersetzung des Frames aus einem Legacy-Frame (810) in einen Tunnel-Burst-Modus-Frame (804) durch Ersetzen einer Basis-Verbindungskennung in den ersten Steuerdaten durch die Tunnel-Kennung.

9. Verfahren gemäß einem der Ansprüche 2 - 8, ferner umfassend folgende Schritte:
Ermittlung, dass der Frame als Tunnel-Paket-Modus-Frame (916) klassifiziert ist;
Beibehaltung einer Kopie des Frame-Körpers nach Ermittlung, dass das Beibehaltungs-Bit (920) gesetzt ist.

10. Verfahren gemäß einem der Ansprüche 1 - 9, bei dem das Relais-Netz unter verteilter Steuerung steht, welche eine erste Tunnel-Routing-Domäne (706) und eine zweite Tunnel-Routing-Domäne (712) aufweist, wobei das Verfahren ferner folgende Schritte umfasst:
automatische Übersetzung des Frames aus einem ersten Frame-Format in ein zweites Frame-Format an einer Bereichsgrenze der ersten Tunnel-Routing-Domäne (706); und
Weiterleitung des übersetzten Frames von der ersten Tunnel-Routing-Domäne (706) an die zweite Tunnel-Routing-Domäne (712).

11. Verfahren gemäß Anspruch 10, bei dem das erste Frame-Format und das zweite Frame-Format eines der folgenden Formate sind:
Tunnel-Paket-Modus-Frame bzw. Legacy-Frame;
Legacy-Frame bzw. Tunnel-Paket-Modus-Frame;
Legacy-Frame bzw. Tunnel-Burst-Modus-Frame;
Tunnel-Burst-Modus-Frame bzw. Legacy-Frame.

12. Verfahren gemäß einem der Ansprüche 2 - 11, ferner umfassend folgende Schritte:
Ermittlung, dass der Frame als Tunnel-Burst-Modus-Frame klassifiziert ist; und
automatische Weiterleitung eines Tunnel-Pakets des Tunnel-Burst-Modus-Frames ohne Parsing des Frame-Körpers.

13. Computer-lesbares Medium, umfassend Befehle, die, wenn sie auf einem Prozessor ausgeführt werden, den Prozessor veranlassen, ein Verfahren zur Bearbeitung eines an einer Relais-Station in einem drahtlosen Multihop-Relaisnetz gemäß einem der Ansprüche 1 - 12 empfangenen Frames durchzuführen.

## Revendications

1. Procédé de traitement d'une trame reçue à une station relais d'un réseau de retransmission sans fil à bonds multiples, la trame comprenant des premières données de contrôle (508) dans un en-tête de la trame (504) et des secondes données de contrôle (512) dans le corps de la trame (516), le procédé comprenant les étapes consistant à :
examiner l'en-tête de la trame (504) pour déterminer si un identifiant de tunnel (510) est inclus dans les premières données de contrôle (508) ;
si l'identifiant de tunnel (510) est inclus dans les premières données de contrôle (508), classifier la trame par examen du contenu des premières données de contrôle (508) ;
si l'identifiant de tunnel n'est pas inclus dans les premières données de contrôle (508) :
analyser le corps de la trame (516) pour récupérer les secondes données de contrôle (512) ;
déterminer si l'identifiant de tunnel est inclus dans les secondes données de contrôle (512) ;
classifier la trame par examen du contenu des premières et secondes données de contrôle (508 et 512) ; et
transférer la trame.

2. Procédé selon la revendication 1, comprenant en outre les étapes consistant à :
classifier la trame en tant que trame au mode rafale en tunnel (518) si l'identifiant de tunnel (510) est inclus dans les premières données de contrôle (508) ;
classifier la trame en tant que trame au mode paquet en tunnel (520) si l'identifiant de tunnel n'est pas inclus dans les premières données de contrôle mais est inclus dans les secondes données de contrôle ; et
classifier la trame en tant que trame héritée (200) si l'identifiant de tunnel n'est inclus ni dans les premières données de contrôle ni dans les secondes données de contrôle.

3. Procédé selon la revendication 2, comprenant en outre l'étape de transposition de la trame d'une trame au mode rafale en tunnel (804) en une trame héritée (810) par remplacement de l'identifiant de tunnel dans les premières données de contrôle par un identifiant de connexion basique.

4. Procédé selon la revendication 2, comprenant en outre l'étape de transposition de la trame d'une trame au mode rafale en tunnel (804) en une trame au mode paquet en tunnel (802) par remplacement de l'identifiant de tunnel dans les premières données de contrôle par un identifiant de connexion basique et insertion des secondes données de contrôle contenant l'identifiant de tunnel dans le corps de la trame.

5. Procédé selon la revendication 2, comprenant en outre l'étape de transposition de la trame d'une trame au mode paquet en tunnel (802) en une trame héritée (810) par retrait des secondes données de contrôle de la trame.

6. Procédé selon la revendication 2, comprenant en outre l'étape de transposition de la trame d'une trame au mode paquet en tunnel (802) en une trame au mode rafale en tunnel (804) par remplacement d'un identifiant de connexion basique dans les premières données de contrôle par l'identifiant de tunnel et retrait des secondes données de contrôle de la trame.

7. Procédé selon la revendication 2, comprenant en outre l'étape de transposition de la trame d'une trame héritée (810) en une trame au mode paquet en tunnel (802) par insertion des secondes données de contrôle contenant l'identifiant de tunnel dans le corps de la trame.

8. Procédé selon la revendication 2, comprenant en outre l'étape de transposition de la trame d'une trame héritée (810) en une trame au mode rafale en tunnel (804) par remplacement d'un identifiant de connexion basique dans les premières données de contrôle par l'identifiant de tunnel.

9. Procédé selon l'une quelconque des revendications 2 à 8, comprenant en outre les étapes consistant à :
déterminer que la trame est classifiée en tant que trame au mode paquet en tunnel (916) ;
retenir une copie du corps de la trame jusqu'à détermination du fait que le bit de retenue (920) est défini à un.

10. Procédé selon l'une quelconque des revendications 1 à 9, dans lequel le réseau de retransmission est commandé par un contrôle distribué comprenant un premier domaine de routage en tunnel (706) et un second domaine de routage en tunnel (712), le procédé comprenant en outre les étapes consistant à :
transposer automatiquement la trame d'un premier format de trame en un second format de trame à une frontière du premier domaine de routage en tunnel (706) ; et
transférer la trame transposée du premier domaine de routage en tunnel (706) au second domaine de routage en tunnel (712).

11. Procédé selon la revendication 10, dans lequel les premier et second formats de trame sont l'un des couples suivants :
respectivement la trame au mode paquet en tunnel et la trame héritée ;
respectivement la trame héritée et la trame au mode paquet en tunnel ;
respectivement la trame héritée et la trame au mode rafale en tunnel ; et
respectivement la trame au mode rafale en tunnel et la trame héritée.

12. Procédé selon l'une quelconque des revendications 2 à 11, comprenant, en outre, les étapes consistant à :
déterminer que la trame est classifiée en tant que trame au mode rafale en tunnel ; et
transférer automatiquement un paquet en tunnel de la trame au mode rafale en tunnel sans analyser le corps de la trame.

13. Support lisible par ordinateur comprenant des instructions qui, lorsqu'elles sont exécutées sur un processeur, amènent le processeur à exécuter un procédé de traitement d'une trame reçue à une station relais d'un réseau de retransmission sans fil à bonds multiples, selon l'une quelconque des revendications 1 à 12.
